# EUROPEAN PATENT SPECIFICATION

(11) **EP 4 263 016 B1**
(45) Date of publication and mention of the grant of the patent: **25.06.2025**
(21) Application number: 21847578.8
(22) Date of filing: 17.12.2021
(51) Int. Cl.: B01D 29/21, B01D 46/24, B01D 46/52

(54) **END CAPS AND PLEAT GUIDES FOR FILTRATION**
ENDKAPPEN UND FALTENFÜHRUNGEN ZUR FILTRATION
BOUCHONS D'EXTRÉMITÉ ET GUIDES DE PLIS POUR FILTRATION

(30) Priority: 17.12.2020 US 202063127066 P
(43) Date of publication of application: 25.10.2023
(73) Proprietor: Donaldson Company, Inc., Bloomington, MN 55431 (US)
(72) Inventor: LAUER, David D., Boomington, Minnesota 55431 (US); YODER, Mikayla A., Bloomington, Minnesota 55431 (US); GOERTZ, Matthew P., Bloomington, Minnesota 55431 (US); MCCOLLAM, Robert P., Bloomington, Minnesota 55431 (US); ANDERSON, Erik P., Bloomington, Minnesota 55431 (US); TUCKER, Brian R., Bloomington, Minnesota 55431 (US); PERRY, Erik J., Bloomington, Minnesota 55431 (US); MORAVEC, Davis B., Bloomington, Minnesota 55431 (US); SUTHAR, Anil, Bloomington, Minnesota 55431 (US)
(74) Representative: Eisenführ Speiser
(86) International application number: PCT/US2021/064017
(87) International publication number: WO 2022/133204

(56) References cited:
- EP-A2- 0 160 168
- GB-A- 1 056 263
- GB-A- 2 295 971
- GB-A- 2 413 510
- JP-U- H0 332 910
- US-A- 5 531 892

## Description

### Field

Embodiments herein relate to end caps and pleat guides for filter assemblies. More specifically, the embodiments herein related to three-dimensionally (3D) printed or injection molded end caps and pleat guides to provide structural support for pleated filter media.

### Background

The control of pleat spacing in filter assemblies is valuable for providing structural support to the filter and to provide performance enhancement to the life of the filter. Conventional filter assemblies incorporate one or more end caps that are generally annular shaped structures having a flat bottomed well that is disposed about a central aperture. To create a filter assembly with a pleated filter media, a significant amount of a curable resin is added to the flat-bottomed end cap and the pleated filter media is inserted and secured to the end cap during the curing process. If the cured resin fails, such as due to improper installation, there is nothing to keep the pleats of the pleated filter media from blinding under strain.

The pleats of the filter media prepared in a flat-bottomed end cap often suffer from pleat blinding caused by excessive strain during the filtration process, particularly related to high pressure within a system and to the high viscosity of the fluid being filtered. Thus, there exists a need to provide structural integrity to the pleats of a pleated filter medium to prevent pleat blinding and filtration inefficiencies.

GB 2 413 510 A relates to a structure of filtering bag combination comprising a filtering member with multiple folds to cover a support having a plurality of bracing members.

JP H03 32910 U shows a cylindrical filter cartridge having a pleated media and an external support.

US 5 531 892 A relates to a filter housing and a pleated filter for the filtration of particulate matter from fluids, particularly air. The filter has a zigzag pleated filter media and a filter frame.

EP 0 160 168 A2 relates to a gas filter cartridge comprising a pleated filter medium and a support for use in filter systems designed to remove solid particles or dust from large volumes of gases, including air.

GB 2 295 971 A relates to filters for gas or air filtration and comprising a filter membrane and support means.

GB 1 056 263 A relates to an internal support composed together of fin-forming elements which support pleated media during filtering of fluids.

### Summary

The invention provides a filter assembly component as claimed in claim 1.

In an embodiment, a filter assembly component is included having an end cap. The end cap can include a pleat guide channel disposed about a circumference of the end cap, the pleat guide channel can have a repeating pattern that includes a plurality of peaks and a plurality of valleys distributed about the circumference of the end cap, where the pleat guide channel is configured to receive and mechanically support a pleated filter media within the pleat guide channel.

In a first aspect, a filter assembly component has a pleat guide including a repeating pattern. The repeating pattern includes a plurality of peaks and a plurality of valleys distributed about a circumference of the pleat guide, and the plurality of peaks and the plurality of valleys are configured to interface with a pleated filter media to maintain pleat spacing between corresponding pleats of the pleated filter media.

In a second aspect, in addition to one or more of the preceding or following aspects, or in the alternative to some aspects, the pleat guide includes an interior pleat guide.

In a third aspect, in addition to one or more of the preceding or following aspects, or in the alternative to some aspects, the pleat guide includes an exterior pleat guide.

In a fourth aspect, in addition to one or more of the preceding or following aspects, or in the alternative to some aspects, the plurality of peaks extend away from a center point of the pleat guide from 0.635 cm (0.25 inches) to 1.27 cm (0.5 inches).

In a fifth aspect, in addition to one or more of the preceding or following aspects, or in the alternative to some aspects, the pleat guide can be from 3 mm to 5 mm thick.

In a sixth aspect, in addition to one or more of the preceding or following aspects, or in the alternative to some aspects, the pleat guide includes a diameter of from 7.62 cm (3 inches) to 12.7 cm (5 inches) in diameter.

The pleat guide includes a central aperture.

The pleat guide defines a plurality of hollow passages extending from a central portion of the pleat guide to a circumferential surface of the pleat guide, wherein the pleat guide further defines a fluid inlet port in fluid communication with the plurality of hollow passages.

**In** a ninth aspect, in addition to one or more of the preceding or following aspects, or in the alternative to some aspects, the pleat guide further includes a first spoke wheel, a second spoke wheel spaced apart axially from the first spoke wheel, and a central longitudinal axle portion connecting the first spoke wheel and the second spoke wheel.

**In** a tenth aspect, in addition to one or more of the preceding or following aspects, or in the alternative to some aspects, the pleat guide includes: a first axial frame configured to be disposed about an exterior of the pleated filter media, a second axial frame configured to be disposed about the exterior of the pleated filter media, the second axial frame spaced apart axially from the first axial frame, and a plurality of longitudinal rods extending between valleys on the first axial frame and valleys on the second axial frame to maintain axial spacing of the first axial frame and the second axial frame.

**In** an eleventh aspect, in addition to one or more of the preceding or following aspects, or in the alternative to some aspects, the pleat guide includes an interior wire frame. The interior wire frame can include: a first axial frame configured to be disposed within an interior of the pleated filter media, a second axial frame configured to be disposed within the interior of the pleated filter media, the second axial frame spaced apart axially from the first axial frame, and a plurality of longitudinal rods extending between peaks on the first axial frame and peaks on the second axial frame to maintain axial spacing of the first axial frame and the second axial frame.

**In** a twelfth aspect, in addition to one or more of the preceding or following aspects, a filter assembly component can include an end cap and the end cap can include a pleat guide channel disposed about a circumference of the end cap. The pleat guide channel can include a repeating pattern which can include a plurality of peaks and a plurality of valleys distributed about the circumference of the end cap, and wherein the pleat guide channel can be configured to receive and mechanically support a pleated filter media within the pleat guide channel.

In a thirteenth aspect, in addition to one or more of the preceding or following aspects, or in the alternative to some aspects, the pleat guide channel includes a uniform pleat channel depth.

In a fourteenth aspect, in addition to one or more of the preceding or following aspects, or in the alternative to some aspects, the pleat guide channel includes a non-uniform pleat channel depth.

In a fifteenth aspect, in addition to one or more of the preceding or following aspects, or in the alternative to some aspects, the pleat guide channel includes a depth of from 0.3175 cm (0.125 inches) to 2.54 cm (1.0 inches).

In a sixteenth aspect, in addition to one or more of the preceding or following aspects, or in the alternative to some aspects, the pleat guide channel includes a thickness that can be from 20% to 30% greater than the thickness of a pleated filter media to be placed into the pleat guide channel.

**In** a seventeenth aspect, in addition to one or more of the preceding or following aspects, or in the alternative to some aspects, the pleat guide channel includes a thickness that can be 25% greater than the thickness of a pleated filter media to be placed into the pleat guide channel.

**In** an eighteenth aspect, in addition to one or more of the preceding or following aspects, or in the alternative to some aspects, the end cap includes a diameter of from 7.62 cm (3 inches) to 12.7 cm (5 inches) in diameter.

**In** a nineteenth aspect, in addition to one or more of the preceding or following aspects, or in the alternative to some aspects, the repeating pattern includes a repeating pattern of uniformly distributed peaks and valleys about the circumference of the end cap.

In a twentieth aspect, in addition to one or more of the preceding or following aspects, or in the alternative to some aspects, the repeating pattern includes a repeating pattern of non-uniformly distributed peaks and valleys about the circumference of the end cap.

This summary is an overview of some of the teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof, each of which is not to be taken in a limiting sense. The scope herein is defined by the appended claims and their legal equivalents.

### Brief Description of the Figures

Aspects may be more completely understood in connection with the following figures (FIGS.), in which:
FIG. 1 is a schematic perspective view of an exemplary filter assembly in accordance with various embodiments herein.
FIG. 2 is a schematic perspective view of an end cap in accordance with various embodiments herein.
FIG. 3 is a top plan view of an end cap in accordance with various embodiments herein.
FIG. 4 is schematic a top plan view of a pleat guide in accordance with various embodiments herein.
FIG. 5 is a schematic perspective view of a pleat guide in accordance with various embodiments herein.
FIG. 6 is a schematic top plan view of a pleat guide positioned within a pleated filter media in accordance with various embodiments herein.
FIG. 7 is a schematic side plan view of a filter assembly, including pleat guides, in accordance with various embodiments herein.
FIG. 8 is a schematic top plan view of a pleat guide in accordance with various embodiments herein.
FIG. 9 is a schematic top plan view of a pleat guide and pleated filter media in accordance with various embodiments herein.
FIG. 10 is a schematic side plan view of a filter assembly, including pleat guides, in accordance with various embodiments herein.
FIGS. 11-13 are schematic top plan views of various pleat guides in accordance with various embodiments herein.
FIG. 14 is a schematic perspective view of a pleat guide back-pulsing assembly, according to the invention.
FIGS. 15-18 are schematic perspective views of various scaffold assemblies in accordance with various embodiments herein.

While embodiments are susceptible to various modifications and alternative forms, specifics thereof have been shown by way of example and drawings and will be described in detail.

### Detailed Description

Pleat spacing within a pleated filter media of a filter assembly is important to the efficient and effective filtration of various fluids, including, but not to be limited to air, water, oils, fuels, hydraulics, and any high viscosity fluids. During manufacture, use, or storage, pleats can become too close together so that they can stick to one another and cause pleat blinding as fluid flows past the filter media and/or when the filter assembly is under pressure. A negative effect of close pleat spacing is that it effectively blinds significant surfaces in the filter media and reduces the overall filter surface area available for filtration. The decrease in filtration surface area can resulting in an increase in a pressure drop across a filter media and a decrease in loading on the filter media. Pleat blinding can significantly affect performance and life of a filter assembly.

Various structures as described herein can be implemented in a filter assembly in order to control pleat spacing so as to prevent pleat blinding, and to maximize overall filter performance. These structures can include components such as end caps configured with pleat guide channels and pleat guides configured to be placed along a length of a filter assembly either on an interior or exterior surface, or both, of a pleated filter media. In some embodiments, the structures described herein can be placed along targeted locations along the inside or outside of a pleated filter media.

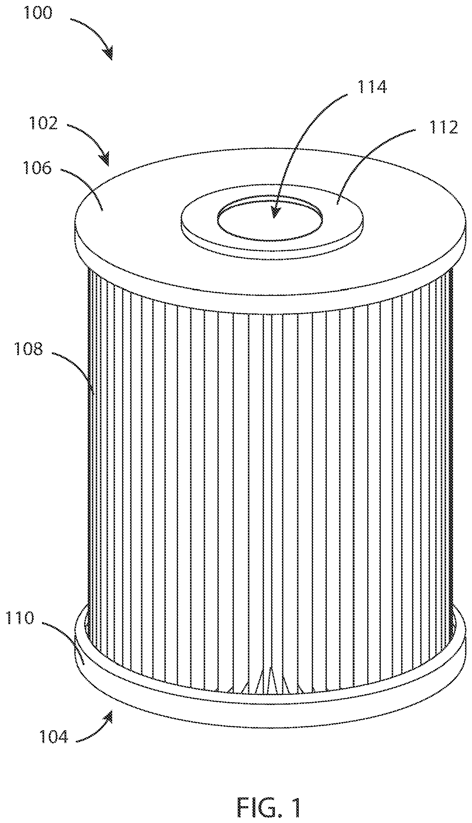

Referring now to FIG. 1, a schematic perspective view of a filter assembly 100 is shown in accordance with various embodiments herein. Filter assembly 100 includes a first end 102 and a second end 104. The filter assembly 100 includes a first end cap 106 disposed at the first end 102 and a second end cap 110 disposed at the second end 104. Disposed between the first end cap 106 and the second end cap 110 is a pleated filter media 108, where pleated filter media 108 includes a plurality of repeating pleats about a circumference of the pleated filter media. Filter assembly can further include a sealable mounting element 112 at a first end 102, a second end 104, or both the first and second ends. Sealable mounting element can include a sealing mechanism such as, but not to be limited to an O-ring seal, threaded surface, and the like, for preventing leakage of a fluid therethrough when installed during use. The filter assembly 100 can further include a central aperture 114 defined by the filter assembly 100 and open at the first end 102 and/or the second end 104. While the filter assembly 100 is shown as a cylindrical shape, it will be appreciated that other shapes are suitable for the embodiments described herein.

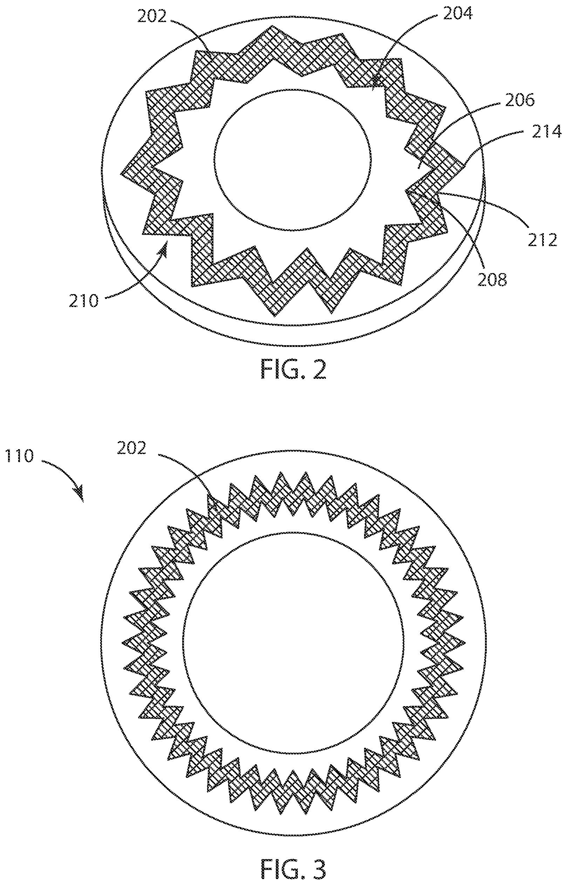

The end caps of the filter assembly can include a pleat guide channel configured to receive and mechanically support a pleated filter media within the pleat guide channel. Referring now to FIG. 2, a schematic perspective view and FIG. 3, a schematic top plan view, of an exemplary end cap is shown in accordance with various embodiments herein. By way of example, the second end cap 110 of FIG. 1 is represented in FIG. 2. Second end cap 110 includes a pleat guide channel 202 defined by the bulk material of the end cap and having a repeating pattern about the circumference of the end cap. The repeating pattern can include a pattern that has the same shape as a given pleated filter media to be inserted into the pleat guide channel.

The filter media suitable for use with the pleat guides herein can have a plurality of pleats ranging from 30 to 65 pleats per filter media unit. In some embodiments, the number of pleats per filter media unit can be greater than or equal to 30 pleats, 35 pleats, 40 pleats, 45 pleats, 50 pleats, 55 pleats, 60 pleats, or 65 pleats, or can be an amount falling within a range between any of the foregoing. The length of the pleats for filter media suitable for use herein can include those having a length extending radially from a center point of the filter unit can be from 1.27 cm (0.5 inches) to 15.24 cm (6 inches). In some embodiments, the length of the pleats can be greater than or equal to 1.27 cm (0.5 in.), 2.54 cm (1.0 in.), 3.81 cm (1.5 in.), 5.08 cm (2.0 in.), 6.35 cm (2.5 in.), 7.62 cm (3.0 in.), 8.89 cm (3.5 in.), 10.16 cm (4.0 in.), 11.43 cm (4.5 in.), 12.7 cm (5.0 in.), 13.97 cm (5.5 in.), or 15.24 cm (6.0 in.), or can be an amount falling within a range between any of the foregoing.

The pleat guide channel 202 can include a repeating pattern of peaks and valleys distributed about a circumference of an end cap. By way of example, an inner circumference 204 of the pleat guide channel 202 can include a first inner perimeter peak 206 extending away from a longitudinal axis of the end cap, and a first inner perimeter valley 208 extending toward a longitudinal axis of the end cap. The outer circumference 210 of the pleat guide channel 202 can include a first outer perimeter peak 212 extending toward a longitudinal axis of the end cap, and a first outer perimeter valley 214 extending away from a longitudinal axis of the end cap.

While only a first inner perimeter peak, a first inner perimeter valley, a first outer perimeter peak, and a first outer perimeter valley are described, it will be appreciated that the pleat guide channel includes a plurality of inner perimeter peaks, inner perimeter valleys, outer perimeter peaks, and outer perimeter valleys The inner perimeter peaks of the inner circumference can be configured to align with the outer perimeter valleys of the outer circumference, and the outer perimeter peaks of the outer circumference can be configured to align with the inner perimeter valleys of the inner circumference. It will be appreciated that this configuration of peaks and valleys provides that the inner circumference and the outer circumference of the pleat guide channel can assume the same profile as each other.

It will be appreciated that while the repeating pattern of peaks and valleys in FIGS. 2 and 3 are shown as sharp, angular structures, the shape of these peaks and valleys can also include a rounded shape, a square shape, a trapezoidal shape, combinations thereof, and the like. In some embodiments, the repeating pattern can include a repeating pattern of uniformly distributed peaks and valleys about a circumference of an end cap. In other embodiments, the repeating pattern can include a repeating pattern of non-uniformly distributed peaks and valleys about a circumference of an end cap.

Pleat guide channel 202 can be configured to receive a curable resin (not shown), such as a polyurethane resin, to act as a glue to affix a pleated filter media within the pleat guide channel of an end cap. In various embodiments, the bottom of the pleat guide channel can be flat, while in other embodiments the bottom of the pleat guide channel can be rounded, triangular, and the like.

In various embodiments, the pleat guide channel can include a uniform pattern about the circumference of the end cap. In other embodiments, the pleat guide channel can include a non-uniform pattern about the circumference of the end cap. In some embodiments the end cap includes only one pleat guide channel, while in other embodiments the end can include more than one pleat guide channel. In other embodiments, the pleat guide channel can include be included to accommodate a pleated filter media that includes a variable pleat height design.

The depth of the pleat guide channel can include depths of from 0.635 cm (0.25 inches) to from 1.27 cm (0.5 inches). In various embodiments, the depth of the pleat guide channel can include depths of from 0.3175 cm (0.125 inches) to 2.54 cm (1.0 inches). In some embodiments, the pleat guide channel can include those having depths of from 0.3175 cm (0.125 inches), 0.635 cm (0.25 inches), 0.9525 cm (0.375 inches), 1.27 cm (0.5 inches). 1.5875 cm (0.625 inches), 1.905 cm (0.75 inches), 2.2225 cm (0.875 inches), and 2.54 cm (1.0 inches), or any depth falling within a range wherein any of the forgoing depths can serve as the lower or upper bound of the range, provided that the lower bound of the range is a value less than the upper bound of the range. In some embodiments, the pleat guide channel comprises a uniform pleat channel depth. In other embodiments, the pleat guide channel comprises a non-uniform pleat channel depth.

The width of the pleat guide channel can include widths of from about 15% to 35% greater than the width of a pleated filter media to be placed into the pleat guide channel. In some embodiments, the width of the pleat guide channel can include those having a width of from 20% to 30% greater than the width of a pleated filter media to be placed into the pleat guide channel. In various embodiments, the width of the pleat guide channel can be from 10%, 15%, 20%, 25%, 30%, or 35% greater than the width of a pleated filter media to be placed into the pleat guide channel, or any percentage falling within a range wherein any of the forgoing percentages can serve as the lower or upper bound of the range, provided that the lower bound of the range is a value less than the upper bound of the range.

The diameter of the end cap can include those from 5.08 cm (2 inches) to 15.24 cm (6 inches) in diameter. In various embodiments, the diameter of the end cap can include those from 7.62 cm (3 inches) to 12.7 cm (5 inches) in diameter. In various embodiments, the diameter of the end cap can include an end cap with a diameter of 3 inches. In various embodiments, the diameter of the end cap can include an end cap with a diameter of 10.16 cm (4 inches). In various embodiments, the diameter of the end cap can include an end cap with a diameter of 12.7 cm (5 inches). In various embodiments, the diameter of the end cap can include those having a diameter of 2.54 cm (1 inch), 5.08 cm (2 inches), 7.62 cm (3 inches), 10.16 cm (4 inches), 12.7 cm (5 inches), 15.24 cm (6 inches), 17.78 cm (7 inches), 20.32 cm (8 inches), 22.86 cm (9 inches), or 25.4 cm (10 inches), or any diameter falling within a range wherein any of the forgoing diameters can serve as the lower or upper bound of the range, provided that the lower bound of the range is a value less than the upper bound of the range. In some embodiments, the diameter of the end cap can include those having a diameter of greater than 25.4 cm (10 inches).

While the embodiments herein describe an end cap configured to receive a single pleat of a pleated filter media within each peak and valley, it will be appreciated that in some embodiments, the peaks and valleys can include configurations where each peak and valley can accept more than one pleat of a pleated filter media. In various embodiments, a single peak or valley disposed along the inner or outer perimeter can accept 1, 2, or 3 pleats from a pleated filter media, or various combinations thereof. In other embodiments, each single peak or valley can accept more than 3 pleats, such that the stability of the pleats is maintained. In yet other embodiments, it will be appreciated that some of the peaks and valleys described in reference to the end caps will be skipped such that they do not include a pleat from a pleated filter media.

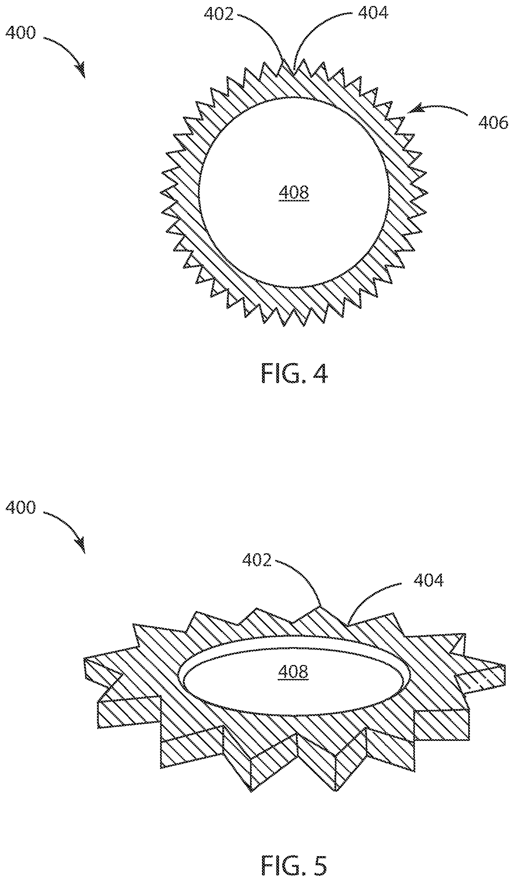

Various types of interior pleat guides are also contemplated herein to provide mechanical support for and to control spacing between the pleats of a pleated filter media. Referring now to FIGS. 4 and 5, a schematic top plan view and a schematic perspective view, respectively, of an interior pleat guide 400 is shown in accordance with various embodiments herein. The interior pleat guide 400 can include a repeating pattern of peaks and valleys distributed about the outer circumference 406 of the interior pleat guide 400. The outer circumference 406 can include a first guide peak 402 extending away from a center point of the interior pleat guide 400, and a first guide valley 404 extending toward a center point of the interior pleat guide 400. The guide peaks along the outer circumference of the interior pleat guide 400 can be configured to align with the filter media valleys of a corresponding pleated filter media, and the guide valleys along the outer circumference of the interior pleat guide 400 can be configured to align with the filter media peaks of a corresponding pleated filter media, thus providing spacing between the pleats of the filter media to keep the pleats apart from each other. Such a configuration prevents blinding of various surfaces of the pleated media filter.

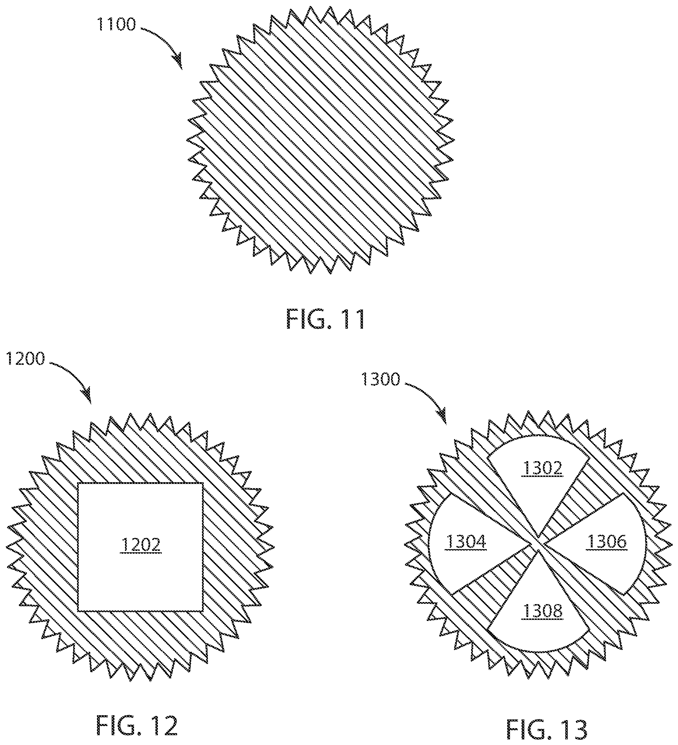

It will be appreciated that while the guide peaks and valleys in FIGS. 4 and 5 are shown as sharp, angular structures, the shape of these peaks and valleys can also include a rounded shape, a square shape, a trapezoidal shape, and the like. The interior pleat guide 400 of FIGS. 4 and 5 further includes a center aperture 408 defined by an interior circumference of the interior pleat guide. The center aperture 408 can accommodate the flow of a fluid therethrough. The center aperture can also accommodate a central core supporting structure threaded therethrough. Additional configurations for the interior pleat guides will be discussed in more detail in reference to FIGS. 11-13 below.

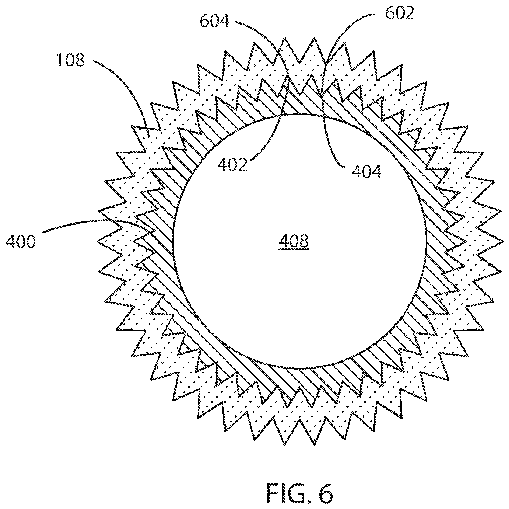

The interior pleat guide discussed in reference to FIGS. 4 and 5 can be placed within an interior of a pleated filter media to provide structural support to the pleats of a pleated filter media to keep them separated during manufacture, storage, and operation. Referring now to FIG. 6, a schematic top plan view an interior pleat guide 400 placed in structural contact with an interior surface of a pleated filter media 108 is shown in accordance with various embodiments herein. It will be appreciated that the guide peaks 402 of the outer circumference of the interior pleat guide 400 can be configured to align with the filter media valleys of an inner circumference of a pleated filter media 108, and the guide valleys 404 of the outer circumference of the interior pleat guide 400 can be configured to align with the filter media peaks 602 of the inner circumference of the pleated filter media 108. The alignment of peaks and valleys allows the peaks and valleys on the interior pleat guide to interface with the pleated filter media to maintain pleat spacing between corresponding pleats of the pleated filter media. Thus, spacing control can be maintained between the pleats of the filter media to keep the pleats apart from each other during manufacture, storage, and operation.

It will be appreciated that not every pleat of a pleated filter media needs a peak or valley of the pleat guide to be in supportive contact therewith. While the embodiments herein describe an interior pleat guide configured to include peaks and valleys that each support a single pleat of a pleated filter media, it will be appreciated that in some embodiments, the interior pleat guide can include spacing regions between neighboring peaks and valleys that are equivalent to the width of a pleat of a pleated filter media but do not provide supportive contact thereto. As such, the interior pleat guides herein can be configured to skip every n^{th} pleat of a pleated filter media, where n can be 1, 2, 3, 4, 5, 6, 7, 8, 9, 10, or more.

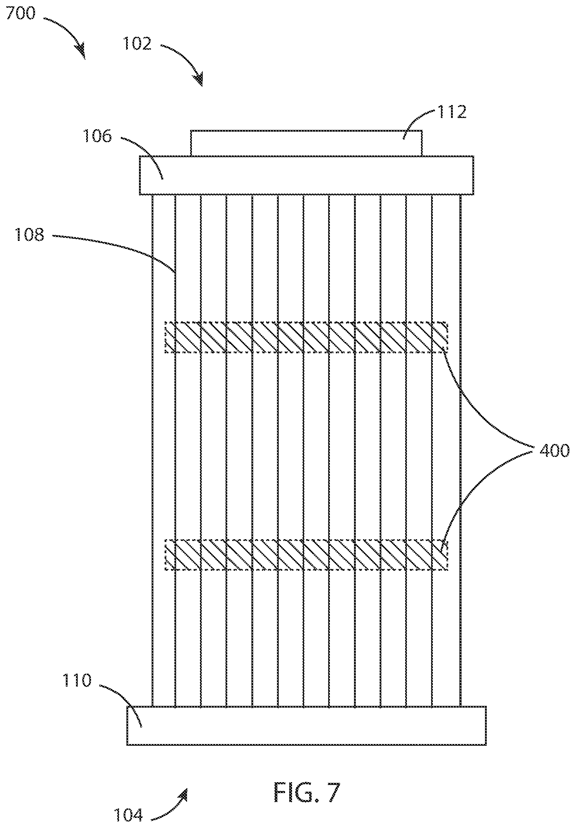

One or more interior pleat guides can be placed along an interior length of a pleated filter media to provide structural support to the pleats to keep them separated during manufacture, storage and operation. Referring now to FIG. 7, a schematic side plan view shows two interior pleat guides 400 placed in structural contact within an interior of a pleated filter media 108 is shown in accordance with various embodiments herein. The filter assembly 700 includes a first end 102 and a second end 104, including a first end cap 106 disposed at the first end 102 and a second end cap 110 disposed at the second end 104. Disposed between the first end cap 106 and the second end cap 110 is a pleated filter media 108, where pleated filter media 108 includes a plurality of repeating pleats about a circumference of the pleated filter media. Filter assembly 700 further includes a sealable mounting element 112 at the first end 102.

Filter assembly 700 includes two interior pleat guides 400 disposed along the length of the pleated filter media 108. While only two interior pleat guides are shown in FIG. 7, it will be appreciated that one or more interior pleat guides can be included in the filter assemblies as contemplated herein. In some embodiments, 1, 2, 3, 4, 5, 6, 7, 8, 9, or 10 interior pleat guides can be included along a length of the pleated filter media of the filter assembly. In some embodiments, the filter assemblies described herein can include any number of interior pleat guides falling within a range wherein any of the forgoing numbers of interior pleat guides can serve as the lower or upper bound of the range, provided that the lower bound of the range is a value less than the upper bound of the range. In various embodiments, one or more interior pleat guides can be connected with struts or other connection means along a length of a pleated filter media to create a cage-like configuration of interior pleat guides. Any number of the interior pleat guides can be attached to the pleated filter media using a glue, heat, or other method of fixation.

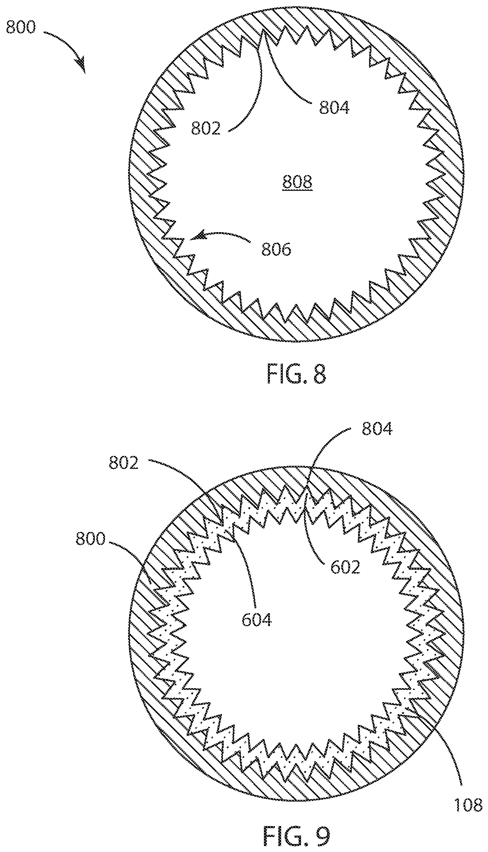

Various types of exterior pleat guides are also contemplated herein to provide mechanical support for and to control spacing between the pleats of a pleated filter media. Referring now to FIG. 8, a schematic top plan view of an exterior pleat guide 800 is shown in accordance with various embodiments herein. The exterior pleat guide 800 can include a repeating pattern of peaks and valleys distributed about the inner circumference 806 of the exterior pleat guide 800. The inner circumference 806 can include a first guide peak 802 extending toward a center point of the exterior pleat guide 800, and a first guide valley 804 extending away from a center point of the exterior pleat guide 800. The guide peaks along the inner circumference of the exterior pleat guide 800 can be configured to align with the filter media valleys of a corresponding pleated filter media, and the guide valleys along the inner circumference of the exterior pleat guide 800 can be configured to align with the filter media peaks of a corresponding pleated filter media, thus providing spacing between the pleats of the filter media to keep the pleats apart from each other during manufacture, storage and operation. Such a configuration prevents blinding of various surfaces of the pleated media filter.

It will be appreciated that while the peaks and valleys in FIG. 8 are shown as sharp, angular structures, the shape of these peaks and valleys can also include a rounded shape, a square shape, a trapezoidal shape, and the like. The exterior pleat guide 800 of FIG. 8 includes a center aperture 808 defined by an interior circumference of the interior pleat guide. The center aperture 808 can accommodate the filter media therethrough.

The exterior pleat guide discussed in reference to FIG. 8 can be placed around the exterior of a pleated filter media to provide structural support to the pleats keep them separated during manufacture, storage and operation. Referring now to FIG. 9, a schematic top plan view of an exterior pleat guide 800 placed in structural contact with the exterior surface of a pleated filter media 108 is shown in accordance with various embodiments herein. It will be appreciated that the guide peaks 802 along the outer circumference of the exterior pleat guide 800 can be configured to align with the filter media valleys 604 of an outer circumference of a pleated filter media 108, and the guide valleys 804 along the outer circumference of the exterior pleat guide 800 can be configured to align with the filter media peaks 602 of the outer circumference of the pleated filter media 108. The alignment of peaks and valleys allows the peaks and valleys on the exterior pleat guide to interface with the pleated filter media to maintain pleat spacing between corresponding pleats of the pleated filter media. Thus, spacing control can be maintained between the pleats of the filter media to keep the pleats apart from each other during manufacture, storage, and operation.

As described above with respect to the interior pleat guides, an exterior pleat guide need not be configured to include peaks and valleys that each support a single pleat of a pleated filter media. It will be appreciated that in some embodiments, the exterior pleat guide can include spacing regions between neighboring peaks and valleys that are equivalent to the width of a pleat of a pleated filter media but do not provide supportive contact thereto. As such, the exterior pleat guides herein can be configured to skip every n^{th} pleat of a pleated filter media, where n can be 1, 2, 3, 4, 5, 6, 7, 8, 9, 10, or more.

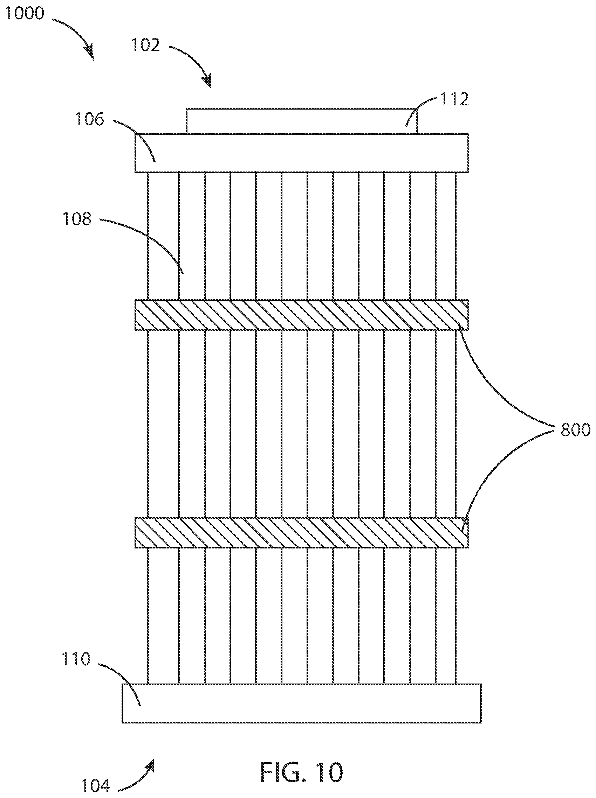

One or more exterior pleat guides can be placed along an exterior length of a pleated filter media to provide structural support to the pleats to keep them separated during manufacture, storage, and operation. Referring now to FIG. 10, a schematic side plan view of two exterior pleat guides 800 placed in structural contact within an exterior of a pleated filter media 108 is shown in accordance with various embodiments herein. The filter assembly 1000 includes a first end 102 and a second end 104, including a first end cap 106 disposed at the first end 102 and a second end cap 110 disposed at the second end 104. Disposed between the first end cap 106 and the second end cap 110 is a pleated filter media 108, where pleated filter media 108 includes a plurality of repeating pleats about a circumference of the pleated filter media. Filter assembly 700 further includes a sealable mounting element 112 at the first end 102.

Filter assembly 1000 includes two exterior pleat guides 800 disposed along the length of the pleated filter media 108. While only two exterior pleat guides are shown in FIG. 10, it will be appreciated that one or more exterior pleat guides can be included in the filter assemblies as contemplated herein. In some embodiments, 1, 2, 3, 4, 5, 6, 7, 8, 9, or 10 exterior pleat guides can be included along a length of the pleated filter media of the filter assembly. In some embodiments, the filter assemblies described herein can include any number of exterior pleat guides falling within a range wherein any of the forgoing numbers of exterior pleat guides can serve as the lower or upper bound of the range, provided that the lower bound of the range is a value less than the upper bound of the range.

In various embodiments, one or more exterior pleat guides can be connected with struts or other connection means along a length of a pleated filter media to create a cage-like configuration of exterior pleat guides. Any number of the exterior pleat guides can be attached to the pleated filter media using a glue, heat, or other method of fixation.

It will be appreciated that the filter assemblies as described herein can utilize any combination of the end caps having pleat guide channels disposed therein, the interior pleat guides, and the exterior pleat guides, as described herein.

Both interior pleat guides and exterior pleat guides described herein can include those having guide peaks and guide valleys of varying depths. In some embodiments, the guide peaks can include those that have a length of from 0.635 cm (0.25 inches) to 1.27 cm (0.5 inches). In some embodiments, the guide peaks can include those that have a length from 0.3175 cm (0.125 inches) to 2.54 cm (1.0 inches). In some embodiments, the guide peaks can include those that have a length of 0.3175 cm (0.125 inches), 0.635 cm (0.25 inches), 0.9525 cm (0.375 inches), 1.27 cm (0.5 inches). 1.5875 cm (0.625 inches), 1.778 cm (0.75 inches), 2.2225 cm (0.875 inches), and 2.54 cm (1.0 inches), or any length falling within a range wherein any of the forgoing lengths can serve as the lower or upper bound of the range, provided that the lower bound of the range is a value less than the upper bound of the range.

In some embodiments, the guide valleys can include those that have a depth of from 0.635 cm (0.25 inches) to 1.27 cm (0.5 inches). In some embodiments, the guide valleys can include those that have depths from 0.3175 cm (0.125 inches) to 2.54 cm (1.0 inches). In some embodiments, the guide valleys can include those that have depth of 0.3175 cm (0.125 inches), 0.635 cm (0.25 inches), 0.9525 cm (0.375 inches), 1.27 cm (0.5 inches). 1.5875 cm (0.625 inches), 1.778 cm (0.75 inches), 2.2225 cm (0.875 inches), and 2.54 cm (1.0 inches), or any depths falling within a range wherein any of the forgoing depths can serve as the lower or upper bound of the range, provided that the lower bound of the range is a value less than the upper bound of the range.

The thickness of both interior pleat guides and exterior pleat guides described herein can include those that have a thickness of from 1 millimeter (mm) to 10 mm. In some embodiments, the thickness of the pleat guides herein can include those having a thickness of from 3 mm to 5 mm thick. In some embodiments, the thickness of the pleat guides herein can include those having a thickness of 1, 2, 3, 4, 5, 6, 7, 8, 9, or 10 mm, or any thickness falling within a range wherein any of the forgoing thicknesses can serve as the lower or upper bound of the range, provided that the lower bound of the range is a value less than the upper bound of the range. In some embodiments, the thickness of the end cap can include those having a diameter of greater than 25.4 cm (10 inches).

The interior pleat guides can further include various configurations as discussed in reference to FIGS. 11-13. Referring now to FIGS. 11-13, schematic top plan views of various pleat guides are shown in accordance with various embodiments herein. The interior pleat guide 1100 shown in FIG. 11 does not include a central aperture. Interior pleat guide 1100 can be formed from a material that includes a honeycomb pattern of pores ranging in size such that the porous interior pleat guide can allow for the passage of a fluid therethrough. The interior pleat guide 1200 shown in FIG. 12 includes a square-shaped central aperture 1202 defined by an inner circumference of the interior pleat guide 1200. The interior pleat guide 1300 shown in FIG. 13 includes a central aperture having four aperture portions 1302, 1304, 1306, and 1308 that are each defined by the body of the interior pleat guide 1300. While the central apertures of FIGS. 12 and 13 are shown to include a square shape or four pie-slice shapes, it will be appreciated that any shape can be utilized to provide a central passageway for the passage of a fluid or other filter assembly component, such as a core structure. Many of these shapes, especially those with multiple aperture portions, also include struts and supports that enhance the structural integrity of the pleat guide.

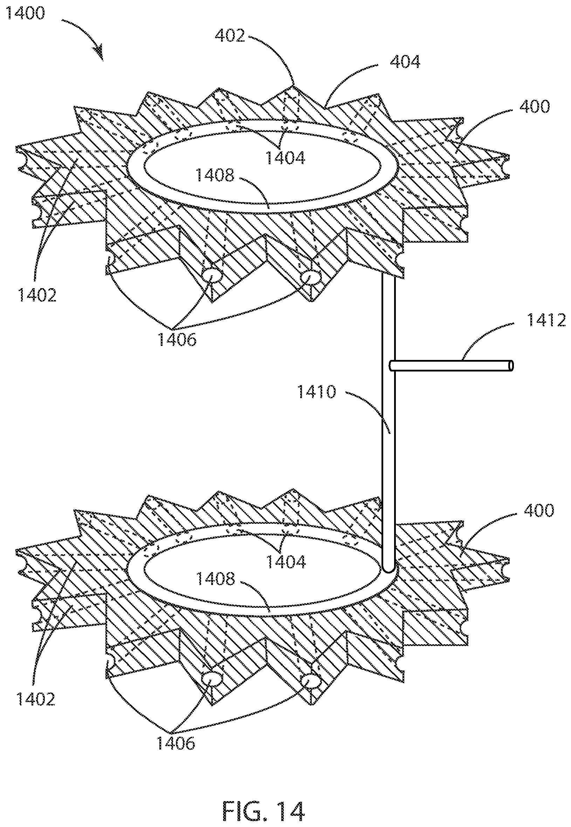

### Back-Pulsing Assembly (FIG. 14)

The interior pleat guides herein further include a plurality of hollow passages disposed within a thickness of the interior pleat guide as part of a back-pulsing assembly. Referring now to FIG. 14, a schematic perspective view of a pleat guide back-pulsing assembly 1400 is shown in accordance with various embodiments herein. In various embodiments, the interior pleat guides 400 can define a plurality of hollow passages 1402 disposed therein. The hollow passages 1402 extend in a radial direction from a central portion of the interior pleat guide to an outermost circumferential surface of the interior pleat guide. In various embodiments the cross section of the hollow passages can be in the shape of a circle, an oval, a square, a triangle, or an amorphous shape.

Each hollow passage 1402 connects a central aperture 1404 at a central portion of the interior pleat guide to an outer circumferential aperture 1406 at the outermost circumferential surface of the interior pleat guide. It will be appreciated that while only five exemplary central apertures 1404 are indicated in each pleat guide of FIG. 14, each hollow passage 1402 will connect a central aperture to an outer circumferential aperture 1406. It will be appreciated that while the outer circumferential apertures 1406 are depicted in FIG. 14 as being disposed at the guide peaks 402, outer circumferential apertures 1406 can also be disposed at the guide valleys 404.

The plurality of central apertures 1404 can be connected to a hollow central coupling ring 1408 disposed at the center of each of the interior pleat guides 400. The hollow central coupling ring 1408 can be an integral component of the interior pleat guide 400 or it can be a separate component to the interior pleat guides 400. Each central coupling ring 1408 can be connected by a longitudinal hollow tube 1410. Longitudinal hollow tube 1410 can be further coupled to a compressed air inlet port 1412. The interior pleat guides 400 with hollow passages 1402, the hollow central coupling ring 1408, the longitudinal hollow tube 1410, and the compressed air inlet port 1412 can form back-pulsing assembly 1400. Like other pleat guides described elsewhere herein, the back-pulsing assembly 1400 can be placed within an interior of a pleated filter media to provide structural support to the pleats of a pleated filter media to keep them separated during manufacture, storage, and operation. While the back-pulsing assembly 1400 shown in FIG. 14 only includes two pleat guides 400, it will be appreciated that more than two pleat guides can be used in the back-pulsing assembly 1400. In some embodiments, the number of pleat guides used in the back-pulsing assembly 1400 can be greater than or equal to two, three, four, five, six, or seven pleat guides.

The plurality of hollow passages 1402 can have a diameter of from 1 millimeter (mm) to 10 mm to span a significant portion of the thickness of the pleat guides. In some embodiments, the diameter of the hollow passages herein can include those having a diameter of from 3 mm to 8 mm thick. In some embodiments, the diameter of the hollow passages described herein can include those having a diameter of 1, 2, 3, 4, 5, 6, 7, 8, 9, or 10 mm, or any diameter falling within a range wherein any of the forgoing diameter can serve as the lower or upper bound of the range, provided that the lower bound of the range is a value less than the upper bound of the range. In some embodiments, the diameter of the hollow passages can include those having a diameter of greater than 10 mm.

The plurality of hollow passages 1402 can be disposed throughout a volume of the interior pleat guides so that at least 50 % of the volume of the pleat guides is made up of hollow passages 1402. In some embodiments, the volume can be greater than or equal to 50 %, 55 %, 60 %, 65 %, 70 %, or 75 %, or can be an amount falling within a range between any of the foregoing.

It will be appreciated that the hollow passages 1402, hollow central coupling ring 1408, longitudinal hollow tube 1410 and compressed air inlet port 1412 can be in fluid communication with one another. Each of the hollow passages 1402, hollow central coupling ring 1408, longitudinal hollow tube 1410 and compressed air inlet port 1412 can be directly or indirectly coupled to one another. By way of example, the components of the hollow passages 1402, hollow central coupling ring 1408, longitudinal hollow tube 1410 and compressed air inlet port 1412 can be of unitary construction, or they can be connected by adhesive, threads, welding, and the like.

Compressed air inlet port 1412 can be connected to a compressed air source, where the compressed air can be pulsed through the back-pulsing assembly 1400 so as to clear any debris from the filter medium in that has built up during use.

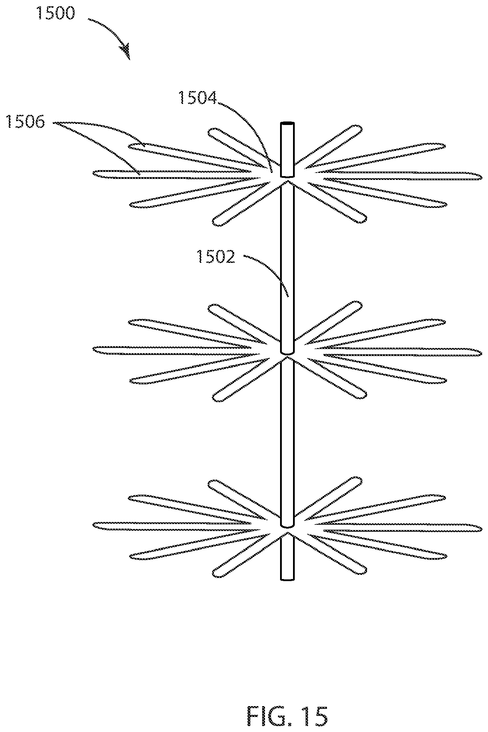

### Scaffold Configurations (FIGS. 15-18)

In various embodiments herein the pleat guides can include those having various scaffold configurations and can be placed within an interior volume of or around an exterior of a pleated filter media to provide structural support to the pleats of a pleated filter media to keep them separated during manufacture, storage, and operation. Referring now to FIGS. 15-18, schematic perspective views of various pleat guides having a scaffold configuration are shown in accordance with various embodiments herein.

The scaffold pleat guide 1500 shown in FIG. 15 can include a central longitudinal axle portion 1502. Central longitudinal axle portion 1502 can be connected to one or more spoke wheels 1504. A first spoke wheel 1504 is spaced apart axially from a second spoke wheel 1504. The central longitudinal axle portion 1502 connects the first spoke wheel to the second spoke wheel and maintains the axial spacing between the two spoke wheels. Each spoke wheel 1504 can include a plurality of spokes 1506 extending in a radial direction outward from the central longitudinal axle portion 1502. The spoke wheels 1504 can include a plurality of spokes 1506 such that there is one spoke 1506 per pleat in the filter medium it is configured to support. It will be appreciated that in some embodiments, the spoke wheels 1504 can include a plurality of spokes 1506 such that it can be configured to skip or support every n^{th} pleat of a pleated filter media, where n can be 1, 2, 3, 4, 5, 6, 7, 8, 9, 10, or more.

The individual spokes 1506 can assume many configurations, including having a blunt end, a round end, and an end having a shape complementary to the shape of the filter media, and the like. In various embodiments, multiple spoke wheels 1504 are included along the longitudinal axis of central axle portion 1502. The scaffold pleat guide 1500 can be of unitary construction or can be individual components assembled together. In some embodiments, the number of spoke wheels 1504 used can be greater than or equal to two, three, four, five, six, seven, or eight spoke wheels.

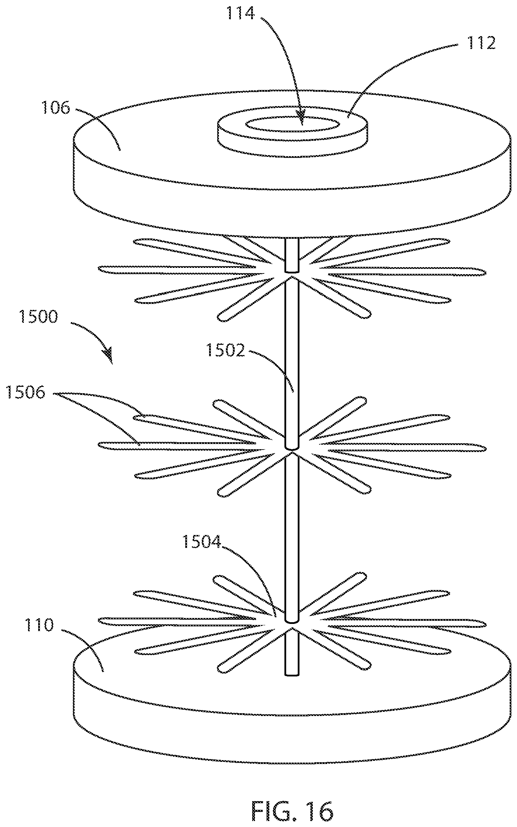

Scaffold pleat guide 1500 is shown in FIG. 15 as a stand-alone structure not connected to any other components. In various embodiments, scaffold pleat guide 1500 can be incorporated as an integral unit with the first end cap 106 and second end cap 110, as shown in FIG. 16. The scaffold pleat guide 1500 can be a single unitary component with the first end cap 106 and the second end cap 110, or it can be a separate component configured to connect to the first end cap 106 and the second end cap 110.

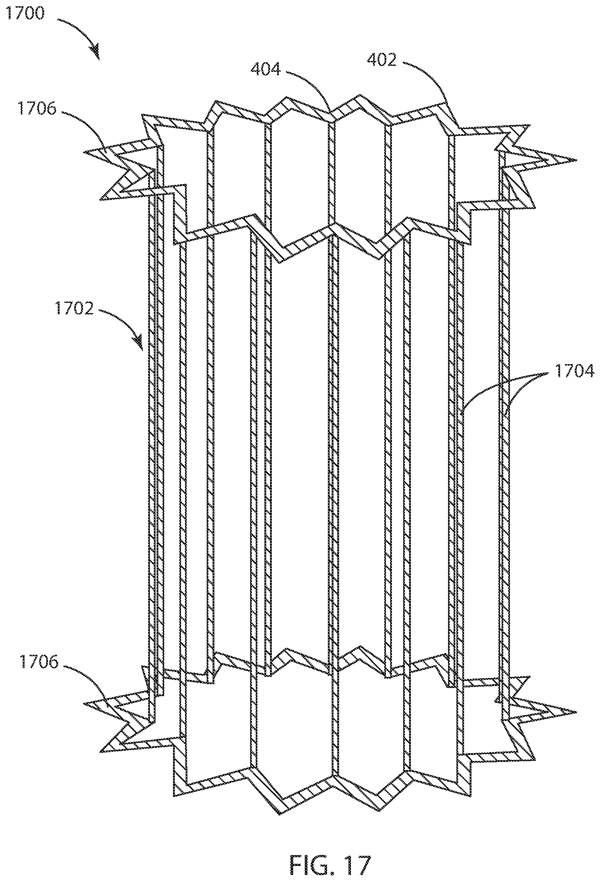

The scaffold pleat guide 1700 shown in FIG. 17 includes a configuration having an exterior wire frame 1702 that can be disposed about the exterior of a filter media. The exterior wire frame 1702 can include one or more axial frames 1706 configured to be shaped complementary to a filter media to be disposed within the center of the scaffold pleat guide 1700. The exterior wire frame 1702 can include a plurality of longitudinal rods 1704 extending between valleys 404 on each of the axial frames 1706. The longitudinal rods 1704 maintain axial spacing between two axial frames. In some embodiments, the number of axial frames 1706 used in the scaffold pleat guide 1700 can be greater than or equal to two, three, four, five, six, or seven axial frames 1706.

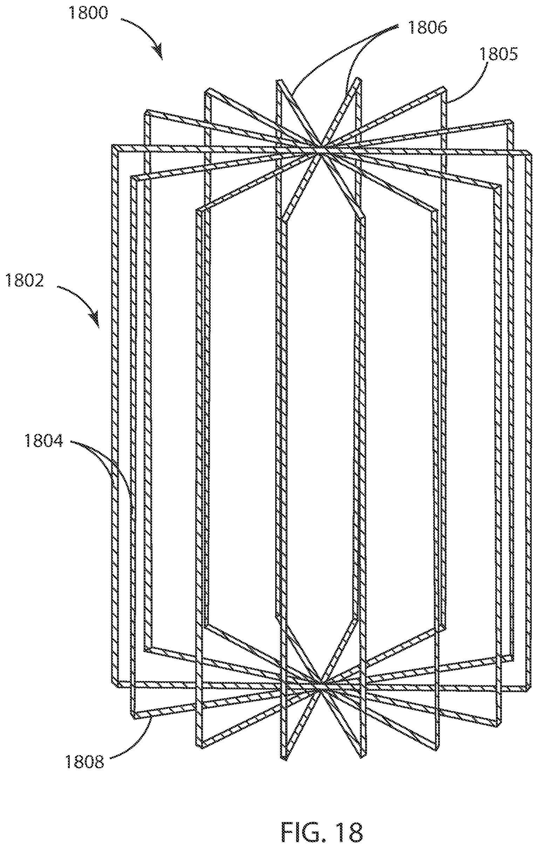

The axial frame 1706 can include a plurality of guide peaks 402 and guide valleys 404 as described elsewhere herein, where that there can be one guide peak 402 per pleat in the filter medium it is configured to support. It will be appreciated that in some embodiments, the axial frame 1706 can include a plurality of guide peaks 402 such that it can be configured to support or skip every n^{th} pleat of a pleated filter media, where n can be 1, 2, 3, 4, 5, 6, 7, 8, 9, 10, or more.
The scaffold pleat guide 1800 shown in FIG. 18 includes a configuration having an interior wire frame 1802 that can be disposed within the interior of a filter media having a corresponding shape. The interior wire frame 1802 includes a plurality of longitudinal rods 1804 that are configured to be disposed within the pleat peaks of a filter media. The interior wire frame 1802 can further include a first axial frame 1805 including one or more axial struts 1806, and a second axial frame 1808 including one or more axial struts 1806. Each axial frame 1805, 1808 can include a plurality of guide peaks 402 and guide valleys 404 as described elsewhere herein, so that there can be one guide peak 402 per pleat in the filter medium it is configured to support. It will be appreciated that in some embodiments, each axial frame can include a plurality of guide peaks 402 such that it can be configured to support or skip every n^{th} pleat of a pleated filter media, where n can be 1, 2, 3, 4, 5, 6, 7, 8, 9, 10, or more.

### 3D Printing Process

The end caps and pleat guide structures described herein can be formed using the process of additive manufacturing, referred to herein as 3-dimensional (3D) printing. The end caps and pleat guide structures generated using 3D printing can include unique and fine structural detail, including those having a high aspect ratio. The fine features incorporated into the end caps and pleat guides can include, but is not to be limited to, a honeycomb pore structure having a varying distribution of varying pore sizes, a honeycomb pore structure having a uniform distribution of uniform pores sizes, fine struts, fine mesh structures, a gradient pore structures throughout the material, threads, ridges, micro-surfaced to confer roughness and additional surface area, open cavities, central apertures, and the like. In various embodiments, the pleat guides can be 3D printed to include guide peaks and valleys that are highly porous to allow for the transfer of a fluid at the pleat guide/pleated filter media interface. In other embodiments, the 3D printing process can mix various materials to generate the end caps and pleat guides.

### Materials for End Caps and Pleat Guides

Various materials are suitable for creating the end caps and pleat guides described herein. The materials include, but are not to be limited to, thermoplastic polymers including, but not to be limited to polyamides, polypropylene, polyurethane, polyethylene, polylactic acid, acrylonitrile butadiene styrene, styrene, and copolymers, mixtures, or derivatives thereof.

It will be appreciated that the pleat guides herein can be constructed of a variety of materials that can withstand a range of pressures, temperatures, and chemical conditions in the environments in which they are used in operation. The pleat guides should further be constructed of materials that are at least as strong as the filter media that they are designed to support.

### Injection Molding

Many of the end caps and pleat guides described herein can be made by injection molding manufacturing methods. Examples of procedures for forming end caps and pleat guides by injection molding manufacturing methods are known in the art.

### Porosity of the Material

The material of an end cap or pleat guide structure described herein can be porous, such as to allow fluid to flow through the structure. This porosity can be accomplished during a printing process by defining many and frequent open spaces interspersed with solid material portions. An example of a pleat guide structure defining four open areas is shown in FIG. 13. These open areas allow for fluid to flow through the structure.

In some embodiments, the open area of an end cap or pleat guide structure can be greater than or equal to 50 %, 52 %, 55 %, 58 %, 60 %, 62 %, 65 %, 68 %, or 70 %. In some embodiments, the open area can be less than or equal to 85 %, 83 %, 81 %, 79 %, 78 %, 76 %, 74 %, 72 %, or 70 %. In some embodiments, the open area can fall within a range of 50 % to 85 %, or 52 % to 83 %, or 55 % to 81 %, or 58 % to 79 %, or 60 % to 78 %, or 62 % to 76 %, or 65 % to 74 %, or 68 % to 72 %, or can be about 70 %.

The analysis of percent open area can be performed by taking a photograph of the end cap or pleat guide and counting up open pixels vs. total pixels. The analysis can be performed an outer perimeter of an end cap or pleat guide. Alternatively, if the end cap or pleat guide or defines a center aperture, the analysis of percent open area can analyzed based on the area between the center aperture 408 or 808 and an outer perimeter of the end cap or pleat guide.

Another way that porosity can also be accomplished is by choosing material for the structure that is itself porous or can be modified after printing to be porous. Some 3D printing materials incorporate particles, such as spheres, of thermoplastic material of a different type than the remainder of the material. These particles can be partially cured and dissolved out of the structure after printing. Another option is to selectively bake or etch away particles that are included in the materials of the structure. These processes result in void spaces within the printed materials, increasing the porosity of the material.

For the purpose of this disclosure, the term "pore size" refers to spaces formed by materials within a printed structure. The pore size of the media can be and estimated by reviewing electron photographs of the media. The average pore size of a media can also be calculated using a Capillary Flow Porometer having model no. APP 1200 AEXSC available from Porous Materials Inc. of Ithaca, NY.

In the context of filtration assemblies used for gas separation, in some embodiments, the average pore size for the printed material can be greater than or equal to 0.3 nanometers, 0.6 nanometers, 0.9 nanometers, 1.2 nanometers, or 1.5 nanometers. In some embodiments, the average pore size can be less than or equal to 3.0 nanometers, 2.6 nanometers, 2.2 nanometers, 1.9 nanometers, or 1.5 nanometers. In some embodiments, the average pore size can fall within a range of 0.3 nanometers to 3.0 nanometers, or 0.6 nanometers to 2.6 nanometers, or 0.9 nanometers to 2.2 nanometers, or 1.2 nanometers to 1.9 nanometers, or can be about 1.5 nanometers.

In other filtration contexts where preservation of the permeability of an existing media is a priority, such as ePTFE, in some embodiments, the average pore size can be greater than or equal to 0.1 microns, 0.2 microns, 0.4 microns, 0.5 microns, 0.7 microns, 0.8 microns, 0.9 microns, 1.1 microns, 1.2 microns, 1.4 microns, or 1.5 microns. In some embodiments, the average pore size can be less than or equal to 3.0 microns, 2.8 microns, 2.7 microns, 2.6 microns, 2.4 microns, 2.2 microns, 2.1 microns, 2.0 microns, 1.8 microns, 1.6 microns, or 1.5 microns. In some embodiments, the average pore size can fall within a range of 0.1 microns to 3.0 microns, or 0.2 microns to 2.8 microns, or 0.4 microns to 2.7 microns, or 0.5 microns to 2.6 microns, or 0.7 microns to 2.4 microns, or 0.8 microns to 2.2 microns, or 0.9 microns to 2.1 microns, or 1.1 microns to 2.0 microns, or 1.2 microns to 1.8 microns, or 1.4 microns to 1.6 microns, or can be about 1.5 microns.

In other filtration contexts such as the semiconductor fields, where preservation of the permeability of an existing media is a priority, in some embodiments, the average pore size can be greater than or equal to 0.01 micrometers, 0.02 micrometers, 0.03 micrometers, 0.04 micrometers, or 0.05 micrometers, or can be an amount falling within a range between any of the foregoing.

In the context of filtration assemblies that use nonwoven composite materials, in some embodiments, the average pore size of the printed material can be greater than or equal to 15 microns, 17 microns, 18 microns, or 20 microns. In some embodiments, the average pore size can be less than or equal to 25 microns, 23 microns, 22 microns, or 20 microns. In some embodiments, the average pore size can fall within a range of 15 microns to 25 microns, or 17 microns to 23 microns, or 18 microns to 22 microns, or can be about 20 microns.

In the context of filtration media where it is important to minimize pressure drop, the average pore size of the printed material, in some embodiments, the average pore size can be greater than or equal to 0.5 mm, 0.6 mm, 0.7 mm, 0.8 mm, 0.9 mm, or 1.0 mm. In some embodiments, the average pore size can be less than or equal to 2.0 mm, 1.8 mm, 1.6 mm, 1.4 mm, 1.2 mm, or 1.0 mm. In some embodiments, the average pore size can fall within a range of 0.5 mm to 2.0 mm, or 0.6 mm to 1.8 mm, or 0.7 mm to 1.6 mm, or 0.8 mm to 1.4 mm, or 0.9 mm to 1.2 mm, or can be about 1.0 mm.

For the purpose of this disclosure, the term "pore size" refers to spaces formed by materials within a printed structure. The pore size of the media can be and estimated by reviewing electron photographs of the media. The average pore size of a media can also be calculated using a Capillary Flow Porometer having model no. APP 1200 AEXSC available from Porous Materials Inc. of Ithaca, NY.

It should be noted that, as used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

It should also be noted that, as used in this specification and the appended claims, the phrase "configured" describes a system, apparatus, or other structure that is constructed or configured to perform a particular task or adopt a particular configuration. The phrase "configured" can be used interchangeably with other similar phrases such as arranged and configured, constructed and arranged, constructed, manufactured and arranged, and the like.

As used herein, the recitation of numerical ranges by endpoints shall include all numbers subsumed within that range (e.g., 2 to 8 includes 2.1, 2.8, 5.3, 7, etc.).

The headings used herein are provided for consistency with suggestions under 37 CFR 1.77 or otherwise to provide organizational cues. These headings shall not be viewed to limit or characterize the invention(s) set out in any claims that may issue from this disclosure. As an example, although the headings refer to a "Field," such claims should not be limited by the language chosen under this heading to describe the so-called technical field. Further, a description of a technology in the "Background" is not an admission that technology is prior art to any invention(s) in this disclosure. Neither is the "Summary" to be considered as a characterization of the invention(s) set forth in issued claims.

The embodiments described herein are not intended to be exhaustive or to limit the invention to the precise forms disclosed in the following detailed description. Rather, the embodiments are chosen and described so that others skilled in the art can appreciate and understand the principles and practices. As such, aspects have been described with reference to various specific and preferred embodiments and techniques.

## Claims

1. A filter assembly component comprising:
a pleat guide (400) comprising a repeating pattern comprising a plurality of peaks (402) and a plurality of valleys (404) distributed about a circumference of the pleat guide (400);
wherein the plurality of peaks (402) and the plurality of valleys (404) are configured to interface with a pleated filter media (108) to maintain pleat spacing between corresponding pleats of the pleated filter media (108);
**characterized in that** the pleat guide (400) defines a plurality of hollow passages (1402) extending from a central portion of the pleat guide (400) to a circumferential surface of the pleat guide, each hollow passage (1402) connecting to a central aperture (1404) at the central portion and connecting to an outer circumferential aperture (1406) at the circumferential surface of the pleat guide, wherein the plurality of central apertures (1404) are connected to a hollow central coupling ring (1408) disposed at the center of each of the interior pleat guides (400),
wherein the pleat guide (400) further defines a fluid inlet port (1412) in fluid communication with the plurality of hollow passages (1402),
and wherein each central coupling ring (1408) is connected by a longitudinal hollow tube (1410), which is further coupled to the fluid inlet port (1412).

2. The filter assembly component of claim 1, wherein the pleat guide comprises an interior pleat guide (400).

3. The filter assembly component of any of claims 1-2, wherein the plurality of peaks extend away from a center point of the pleat guide from 0.635 cm (0.25 inches) to 1.27 cm (0.5 inches).

4. The filter assembly component of any of claims 1-3, wherein the pleat guide is from 3 mm to 5 mm thick.

5. The filter assembly component of any of claims 1-4, wherein the pleat guide comprises a diameter of from 7.62 cm (3 inches) to 12.7 cm (5 inches) in diameter.

6. The filter assembly component of any of claims 1-5, wherein the pleat guide comprises a central aperture (408).

7. The filter assembly component according to claims 1-6, comprising: an end cap (106, 110) comprising a pleat guide channel (202) disposed about a circumference of the end cap (106, 110), the pleat guide channel (202) comprising a repeating pattern comprising a plurality of peaks and a plurality of valleys distributed about the circumference of the end cap (106, 110); and wherein the pleat guide channel (202) is configured to receive and mechanically support a pleated filter media (108) within the pleat guide channel (202).

8. The filter assembly component of claim 7, wherein the pleat guide channel (202) comprises a uniform pleat channel depth.

9. The filter assembly component of any of claims 7-8, wherein the pleat guide channel (202) comprises a non-uniform pleat channel depth.

10. The filter assembly component of any of claims 7-9, wherein the pleat guide channel (202) comprises a depth of from 0.3175 cm (0.125 inches) to 2.54 cm (1.0 inches).

11. The filter assembly component of any of claims 7-10, wherein the pleat guide channel (202) comprises a thickness that is from 20% to 30% greater than the thickness of a pleated filter media (108) to be placed into the pleat guide channel (202).

12. The filter assembly component of any of claims 7-11, wherein the pleat guide channel (202) comprises a thickness that is 25% greater than the thickness of a pleated filter media (108) to be placed into the pleat guide channel (202).

13. The filter assembly component of any of claims 7-12, wherein the end cap (106, 110) comprises a diameter of from 76.2 mm (3 inches) to 127 mm (5 inches) in diameter.

14. The filter assembly component of any of claims 7-13, wherein the repeating pattern comprises a repeating pattern of uniformly distributed peaks and valleys about the circumference of the end cap (106, 110).

15. The filter assembly component of any of claims 7-14, wherein the repeating pattern comprises a repeating pattern of non-uniformly distributed peaks and valleys about the circumference of the end cap (106, 110).

## Patentansprüche

1. Filterbaugruppenkomponente, die Folgendes umfasst:
eine Faltenführung (400) mit einem sich wiederholenden Muster, das eine Vielzahl von Spitzen (402) und eine Vielzahl von Tälern (404) umfasst, die über einen Umfang der Faltenführung (400) verteilt sind;
wobei die mehreren Spitzen (402) und die mehreren Täler (404) so konfiguriert sind, dass sie mit einem gefalteten Filtermedium (108) zusammenwirken, um den Faltenabstand zwischen den entsprechenden Falten des gefalteten Filtermediums (108) aufrechtzuerhalten;
**dadurch gekennzeichnet, dass** die Faltenführung (400) eine Vielzahl von hohlen Durchgängen (1402) definiert, die sich von einem zentralen Abschnitt der Faltenführung (400) zu einer Umfangsfläche der Faltenführung erstrecken, jeder hohle Durchgang (1402) mit einer zentralen Öffnung (1404) am zentralen Abschnitt und mit einer äußeren Umfangsöffnung (1406) an der Umfangsfläche der Faltenführung verbunden ist, wobei die mehreren zentralen Öffnungen (1404) mit einem hohlen zentralen Kupplungsring (1408) verbunden sind, der in der Mitte jeder der inneren Faltenführungen (400) angeordnet ist,
wobei die Faltenführung (400) ferner eine Fluideinlassöffnung (1412) definiert, die in Fluidverbindung mit der Mehrzahl von hohlen Durchgängen (1402) steht,
und wobei jeder zentrale Kupplungsring (1408) durch ein hohles Längsrohr (1410) verbunden ist, das zudem mit der Fluideinlassöffnung (1412) verbunden ist.

2. Filterbaugruppenkomponente nach Anspruch 1, wobei die Faltenführung eine innere Faltenführung (400) umfasst.

3. Filterbaugruppenkomponente nach einem der Ansprüche 1 bis 2, wobei sich die Mehrzahl von Spitzen von einem Mittelpunkt der Faltenführung von 0,635 cm (0,25 Zoll) bis 1,27 cm (0,5 Zoll) weg erstreckt.

4. Filterbaugruppenkomponente nach einem der Ansprüche 1 bis 3, wobei die Faltenführung eine Dicke von 3 mm bis 5 mm aufweist.

5. Filterbaugruppenkomponente nach einem der Ansprüche 1 bis 4, wobei die Faltenführung einen Durchmesser von 7,62 cm (3 Zoll) bis 12,7 cm (5 Zoll) aufweist.

6. Filterbaugruppenkomponente nach einem der Ansprüche 1 bis 5, wobei die Faltenführung eine zentrale Öffnung (408) aufweist.

7. Filteranordnungskomponente nach einem der Ansprüche 1 bis 6, umfassend: eine Endkappe (106, 110), die einen Faltenführungskanal (202) umfasst, der um einen Umfang der Endkappe (106, 110) angeordnet ist, wobei der Faltenführungskanal (202) ein sich wiederholendes Muster umfasst, das eine Vielzahl von Spitzen und eine Vielzahl von Tälern umfasst, die über den Umfang der Endkappe (106, 110) verteilt sind; und wobei der Faltenführungskanal (202) so konfiguriert ist, dass er ein gefaltetes Filtermedium (108) innerhalb des Faltenführungskanals (202) aufnimmt und mechanisch stützt.

8. Filterbaugruppenkomponente nach Anspruch 7, wobei der Faltenführungskanal (202) eine einheitliche Faltenkanaltiefe aufweist.

9. Filterbaugruppenkomponente nach einem der Ansprüche 7 bis 8, wobei der Faltenführungskanal (202) eine ungleichmäßige Faltenkanaltiefe aufweist.

10. Filterbaugruppenkomponente nach einem der Ansprüche 7 bis 9, wobei der Faltenführungskanal (202) eine Tiefe von 0,3175 cm (0,125 Zoll) bis 2,54 cm (1,0 Zoll) aufweist.

11. Filterbaugruppenkomponente nach einem der Ansprüche 7 bis 10, wobei der Faltenführungskanal (202) eine Dicke aufweist, die 20 % bis 30 % größer ist als die Dicke eines gefalteten Filtermediums (108), das in den Faltenführungskanal (202) eingebracht werden soll.

12. Filterbaugruppenkomponente nach einem der Ansprüche 7 bis 11, wobei der Faltenführungskanal (202) eine Dicke aufweist, die 25 % größer ist als die Dicke eines gefalteten Filtermediums (108), das in den Faltenführungskanal (202) eingelegt werden soll.

13. Filterbaugruppenkomponente nach einem der Ansprüche 7 bis 12, wobei die Endkappe (106, 110) einen Durchmesser von 76,2 mm (3 Zoll) bis 127 mm (5 Zoll) aufweist.

14. Filterbaugruppenkomponente nach einem der Ansprüche 7 bis 13, wobei das sich wiederholende Muster ein sich wiederholendes Muster von gleichmäßig verteilten Spitzen und Tälern über den Umfang der Endkappe (106, 110) umfasst.

15. Filterbaugruppenkomponente nach einem der Ansprüche 7 bis 14, wobei das sich wiederholende Muster ein sich wiederholendes Muster aus ungleichmäßig verteilten Spitzen und Tälern über den Umfang der Endkappe (106, 110) umfasst.

## Revendications

1. Composant d'ensemble de filtre, comprenant:
un guide de plis (400) comprenant un motif répétitif comprenant une pluralité de sommets (402) et une pluralité de creux (404) répartis sur la circonférence du guide de plis (400);
la pluralité de sommets (402) et la pluralité de creux (404) étant configurés pour s'interfacer avec un matériau filtrant plissé (108) afin de maintenir l'espacement entre plis entre les plis correspondants du matériau filtrante plissée (108);
**caractérisé en ce que** le guide de plis (400) définit une pluralité de passages creux (1402) qui s'étendent depuis une portion centrale du guide de plis (400) à une surface circonférentielle du guide de plis, chaque passage creux (1402) se connectant à une ouverture centrale (1404) au niveau de la portion centrale et se connectant à une ouverture circonférentielle extérieure (1406) au niveau de la surface circonférentielle du guide de plis, la pluralité d'ouvertures centrales (1404) étant connectées à un anneau de couplage central (1408) creux disposé au niveau du centre de chacun des guides de plis intérieurs (400),
le guide de plis (400) définissant en outre un orifice d'entrée de fluide (1412) en communication fluidique avec la pluralité de passages creux (1402),
et chaque anneau de couplage central (1408) étant relié par un tube creux longitudinal (1410) qui est en outre couplé à l'orifice d'entrée de fluide (1412).

2. Composant d'ensemble de filtre selon la revendication 1, le guide de plis comprenant un guide de plis intérieur (400).

3. Composant d'ensemble de filtre selon l'une des revendications 1 et 2, la pluralité de sommets s'étendant à l'écart d'un point central du guide de plis de 0,635 cm (0,25 pouce) à 1,27 cm (0,5 pouce).

4. Composant d'ensemble de filtre selon l'une des revendications 1 à 3, le guide de plis ayant une épaisseur de 3 mm à 5 mm.

5. Composant d'ensemble de filtre selon l'une des revendications 1 à 4, le guide de plis ayant un diamètre compris entre 7,62 cm (3 pouces) et 12,7 cm (5 pouces).

6. Composant d'ensemble de filtre selon l'une des revendications 1 à 5, le guide de plis comprenant une ouverture centrale (408).

7. Composant d'ensemble de filtre selon les revendications 1 à 6, comprenant: un capuchon d'extrémité (106, 110) comprenant un canal de guide de plis (202) disposé autour d'une circonférence du capuchon d'extrémité (106, 110), le canal de guide de plis (202) comprenant un motif répétitif comprenant une pluralité de sommets et une pluralité de creux réparties autour de la circonférence du capuchon d'extrémité (106, 110); et le canal de guide de plis (202) étant configuré pour recevoir et supporter mécaniquement un matériau filtrant plissé (108) à l'intérieur du canal de guide de plis (202).

8. Composant d'ensemble de filtre selon la revendication 7, le canal de guide de plis (202) comprenant une profondeur de canal de plis uniforme.

9. Composant d'ensemble de filtre selon l'une des revendications 7 à 8, le canal de guide de plis (202) comprenant une profondeur de canal de plis non uniforme.

10. Composant d'ensemble de filtre selon l'une des revendications 7 à 9, le canal de guide de plis (202) comprenant une profondeur de 0,3175 cm (0,125 pouce) à 2,54 cm (1,0 pouce).

11. Composant d'ensemble de filtre selon l'une des revendications 7 à 10, le canal de guide de plis (202) comprenant une épaisseur qui est de 20 % à 30 % supérieure à l'épaisseur d'un matériau filtrant plissé (108) à placer dans le canal de guide de plis (202).

12. Composant d'ensemble de filtre selon l'une des revendications 7 à 11, le canal de guide de plis (202) comprenant une épaisseur qui est de 25 % supérieure à l'épaisseur d'un matériau filtrant plissé (108) à placer dans le canal de guide de plis (202).

13. Composant d'ensemble de filtre selon l'une des revendications 7 à 12, le capuchon d'extrémité (106, 110) ayant un diamètre de 76,2 mm (3 pouces) à 127 mm (5 pouces).

14. Composant d'ensemble de filtre selon l'une des revendications 7 à 13, le motif répétitif comprenant un motif répétitif de sommets et de creux uniformément répartis sur la circonférence du capuchon d'extrémité (106, 110).

15. Composant d'ensemble de filtre selon l'une des revendications 7 à 14, le motif répétitif comprenant un motif répétitif de sommets et de creux non uniformément répartis sur la circonférence du capuchon d'extrémité (106, 110).
